# EUROPÄISCHE PATENTANMELDUNG

(11) **EP 2 842 413 A1**
(43) Veröffentlichungstag der Anmeldung: **04.03.2015**
(21) Anmeldenummer: 14169222.8
(22) Anmeldetag: 21.05.2014
(51) Int. Cl.: A01F 29/02, A01F 29/06, A01F 29/09, B02C 18/18, B26D 1/00

(54) **Element zum Abstützen und/oder Leiten von Erntegut in einer Erntemaschine**

(30) Priorität: 21.06.2013 DE 102013211829
(71) Anmelder: Deere & Company, Moline, IL 61265 (US)
(72) Erfinder: Bacon, Joshua D, 66894 Bechhofen (DE); Schäfer, Rainer, 66482 Zweibrücken (DE); McLawhorn, Patrick, 66482 Zweibrücken (DE)
(74) Vertreter: Holst, Sönke

(57) **Zusammenfassung**

Ein Element zum Abstützen und/oder Leiten von Erntegut in einer Erntemaschine, insbesondere Gegenschneide (38) oder Abstreifer (74), umfasst einen Körper (56) mit einer sich axial erstreckenden Ausnehmung (58), in welcher ein komplementärer, eine Kante (54) umfassender Hartstoffeinsatz (64) eingefügt ist. Die Ausnehmung (58) schließt den Hartstoffeinsatz (64) an wenigstens drei Flächen ein.

## Beschreibung

Die Erfindung betrifft ein Element zum Abstützen und/oder Leiten von Erntegut in einer Erntemaschine, insbesondere eine Gegenschneide oder einen Abstreifer, umfassend einen einteiligen Körper mit einer sich axial erstreckenden Ausnehmung, in welcher ein komplementärer, eine Kante umfassender Hartstoffeinsatz eingefügt oder einfügbar ist.

### Stand der Technik

Feldhäcksler sind landwirtschaftliche Erntemaschinen, die Erntegut von einem Feld aufnehmen, häckseln und durch einen Auswurfkrümmer auf ein Transportfahrzeug überladen. Das Erntegut kann aus auf dem Feld stehenden Pflanzen, wie Mais oder Getreide, oder bereits geschnittenen, in einem Schwad zusammengeführten Pflanzen, insbesondere Gras, bestehen und wird in der Regel als Viehfutter oder zur Biogaserzeugung verwendet. Der Schnittvorgang erfolgt durch eine rotierende Häckseltrommel mit einer Anzahl um ihren Umfang verteilter Messer, die das Erntegut im Zusammenwirken mit einer Gegenschneide zerkleinern.

Die Gegenschneide ist im Betrieb, unter anderem aufgrund im Erntegut mitgeführter Sandpartikel, einem erheblichen Verschleiß ausgesetzt, weshalb sie zumindest im Bereich ihrer als Schneidkante dienenden Längsseite üblicherweise mit einer verschleißfesten Beschichtung versehen wird (vgl. EP 1 264 535 A1). Die Lebensdauer der Materialien, die für eine derartige Beschichtung verwendet werden können, und somit auch die Standzeit der Gegenschneide, sind jedoch begrenzt.

Außerdem sind Gegenschneiden mit ausgefasten Ecken bekannt, in welchen Hartstoffeinsätze aus Werkzeugstahl durch Bogenschweißen befestigt werden (vgl. den in EP 1 264 535 A1 erwähnten Stand der Technik). Hierbei erweist sich eine hinreichend dauerhafte Befestigung der Hartstoffeinsätze, die den tangentialen Schnittkräften der Häckseltrommel widerstehen müssen, als problematisch.

Es wurde auch vorgeschlagen, in den Körper der Gegenschneide eine axiale Vertiefung einzubringen, in welche eine Halterung eingeschraubt wird, die wiederum eine axiale Nut aufweist, in welche die Gegenscheidkante bildende, verschleißresistente Einsätze aus gesintertem Hartmetall eingesetzt werden (EP 0 761 089 A1). Die Hartstoffeinsätze sind keilförmig mit von der Gegenscheidkante beabstandeten, dickeren Enden und werden durch die Schrauben und die Halterung am Körper der Gegenscheide fixiert. Diese Fixierung der Hartstoffeinsätze ist aufgrund der gewählten Keilform der Hartstoffeinsätze und der Halterung relativ aufwändig herzustellen und erfordert zudem, dass die Schrauben stets hinreichend fest angezogen werden, um die Hartstoffeinsätze an ihrer beabsichtigten Position zu haltern.

Ähnliche Verschleißprobleme bestehen auch an Abstreifern, die bei Feldhäckslern beispielsweise Walzen im Einzugskanal oder von Nachzerkleinerungsvorrichtungen zugeordnet sind. Abstreifer werden jedoch auch in anderen Erntemaschinen, wie Mähdreschern oder Ballenpressen, verwendet.

### Aufgabe

Das der Erfindung zu Grunde liegende Problem wird darin gesehen, ein Element zum Abstützen und/oder Leiten von Erntegut in einer Erntemaschine bereitzustellen, welches die erwähnten Nachteile nicht oder in einem verminderten Maße aufweist.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Element zum Abstützen und/oder Leiten von Erntegut in einer Erntemaschine, insbesondere eine Gegenschneide für einen Feldhäcksler oder ein Abstreifer, setzt sich zusammen aus einem einteiligen Körper mit einer sich axial erstreckenden Ausnehmung und wenigstens einem komplementären, in die Ausnehmung hinein passenden Hartstoffeinsatz, der eine Kante umfasst. Wenigstens eine Fläche der Ausnehmung ist derart angeordnet, dass ein im Betrieb auf den Hartstoffeinsatz wirkendes Drehmoment vom Hartstoffeinsatz auf den Körper überleitet.

Auf diese Weise wird der Hartstoffeinsatz mit der Kante gegenüber den (in tangentialer Richtung der mit der Gegenschneide zusammenwirkenden Messern einer Häckseltrommel wirkenden) Schneidkräften und den durch die Schneidkräfte induzierten Drehmomenten (d.h. in tangentialer und radialer Richtung der Messer der Häckseltrommel) fixiert und abgestützt. Analog wird der Hartstoffeinsatz in einem Abstreifer gegen das durch die Scherkräfte des Ernteguts induzierte Drehmoment gesichert. Eine unerwünschte Bewegung des Hartstoffeinsatzes gegenüber dem Körper ist nicht zu befürchten. Im Ergebnis ist die Standzeit des Elements verlängert. Durch die Einteiligkeit des Körpers erübrigt sich die im Stand der Technik nach EP 0 761 089 A1 noch vorgesehene, separate Halterung.

Die Fläche kann insbesondere den Hartstoffeinsatz zwischen sich und einer weiteren Fläche des Körpers einschließen.

Bei einer möglichen Ausführungsform liegt die Ausnehmung liegt im montierten Zustand an wenigstens drei Flächen des Hartstoffeinsatzes an. Alternativ kann der Hartstoffeinsatz einen Vorsprung mit dreieckigem Querschnitt aufweisen.

Der Hartstoffeinsatz und der Körper sind insbesondere durch eine zusätzliche, in der Ausnehmung angeordnete, sich axial erstreckende Vertiefung und einen darin eingreifenden Vorsprung aneinander befestigt oder befestigbar. Die Vertiefung ist vorzugsweise im Körper angeordnet, während der Vorsprung am Hartstoffeinsatz angeordnet ist. Die umgekehrte Anbringung ist jedoch auch denkbar. Denkbar sind auch beliebige andere Formen der Vertiefung, wie beispielsweise ein halbkreisförmiger Querschnitt, der zusätzlich eine gerade Fläche umfassen kann, denkbar. Der halbkreisförmige Querschnitt realisiert im Rahmen des Gedankens der vorliegenden Erfindung eine quasi unendlich große Anzahl an Flächen, an denen sich der Hartstoffeinsatz und der Körper berühren.

Die Vertiefung und der Vorsprung weisen vorzugsweise einen zumindest näherungsweise rechteckigen Querschnitt auf, obwohl auch dreieckige und beliebige andere Querschnitte möglich sind.

Weiterhin erstrecken sich die Vertiefung und der Vorsprung insbesondere parallel zur Oberseite des Körpers oder in einem Winkel von insbesondere 45° dazu nach unten. Die Schneid- oder Scherkräfte drücken dann den Vorsprung in die Vertiefung (bzw. umgekehrt) und verhaken den Hartstoffeinsatz im Körper. Durch eine nach oben gerichtete Winkelform der Vertiefung und des Vorsprungs wird der Widerstand gegen die tangentialen Schneidkräfte noch weiter vergrößert. Selbstverständlich sind auch andere Winkel als 45° verwendbar.

Bei einer möglichen Ausführungsform sind in axialer Richtung mehrere Hartstoffeinsätze aufeinander folgend angeordnet und weisen komplementär ineinander eingreifende Endabschnitte auf. Die Kante setzt sich demnach aus mehreren, in axialer Richtung aufeinanderfolgenden Segmenten zusammen, die durch die Endabschnitte in tangentialer und/oder radialer Richtung (d.h. in der radialen Ebene der Häckseltrommel oder Walze), wie auch in axialer Richtung, gegenüber der Häckseltrommel oder Walze aneinander fixiert werden, um unerwünschte Verschiebungen oder andere Bewegungen der Hartstoffeinsätze gegenüber dem Körper zu vermeiden.
Weiterhin kann der Hartstoffeinsatz eine nicht-axiale Kante bilden, die beispielsweise sägezahnförmig oder wellenförmig, schräg oder mit Vertiefungen (vgl. EP 0 022 053 A1) ausgestattet sein kann. Da die mit der Gegenschneide zusammenwirkende Häckseltrommel, wie im Stand der Technik, zylindrisch ausgeführt ist, muss die Kante bei dieser Ausführungsform der Zylinderform der Häckseltrommel dreidimensional folgen, um einen über die Länge der Gegenschneide konstanten Schneidspalt zu erzielen. Durch die nicht-axiale, sondern gegenüber der Axialen im Winkel angeordneten Gegenschneide wird der Schneidvorgang bei unveränderter, zylindrischer Häckseltrommelgeometrie zeitlich entzerrt, da größere Schnittwinkel möglich werden, was sich positiv auf die Schneidkräfte und die Standzeit sowie auf die Geräuschemission auswirkt. Durch über die Breite der Häckseltrommel unterschiedliche Winkel der Gegenschneide kann sogar die Schnittfrequenz und das entstehende Geräuschspektrum modifiziert und optimiert werden. Außerdem kann das Problem der im Stand der Technik bei geraden Gegenschneiden und im Winkel angeordneten Messern der Häckseltrommel zu beobachtenden Förderung des Häckselguts axial zum Trommelzentrum hin durch diese Gegenschneidenform vermieden oder vermindert werden, wenn die Neigung der abgeschrägten Abschnitte der Gegenscheide nach außen hin orientiert ist.

Der Hartstoffeinsatz besteht insbesondere aus gesintertem oder gegossenem Hartmetall. Durch diese Herstellungsmethode lassen sich auch die im vorhergehenden Absatz beschriebenen Hartstoffeinsätze mit nicht-axialer Kante unproblematisch herstellen.

### Ausführungsbeispiel

In den Zeichnungen sind nachfolgend näher beschriebene Ausführungsbeispiele der Erfindung dargestellt. Es zeigt:
- Fig. 1: einen Feldhäcksler in Flächenansicht und in schematischer Darstellung,
- Fig. 2: einen Querschnitt durch eine erste Ausführungsform einer Gegenschneide,
- Fig. 3: einen Querschnitt durch eine zweite Ausführungsform einer Gegenschneide,
- Fig. 4: einen Querschnitt durch eine dritte Ausführungsform einer Gegenschneide,
- Fig. 5: einen Querschnitt durch eine vierte Ausführungsform einer Gegenschneide,
- Fig. 6: einen Querschnitt durch eine fünfte Ausführungsform einer Gegenschneide,
- Fig. 7: einen Querschnitt durch eine sechste Ausführungsform einer Gegenschneide,
- Fig. 8: einen Querschnitt durch eine siebte Ausführungsform einer Gegenschneide,
- Fig. 9: eine Draufsicht auf eine achte Ausführungsform einer Gegenschneide,
- Fig. 10: eine Frontansicht einer neunten Ausführungsform einer Gegenschneide,
- Fig. 11: eine Frontansicht einer zehnten Ausführungsform einer Gegenschneide,
- Fig. 12: eine seitliche Ansicht einer Walze einer Nachzerkleinerungseinrichtung mit einem Abstreifer, und
- Fig. 13: eine seitliche Ansicht einer Häckseltrommel mit einer Gegenschneide und Abstreifern.

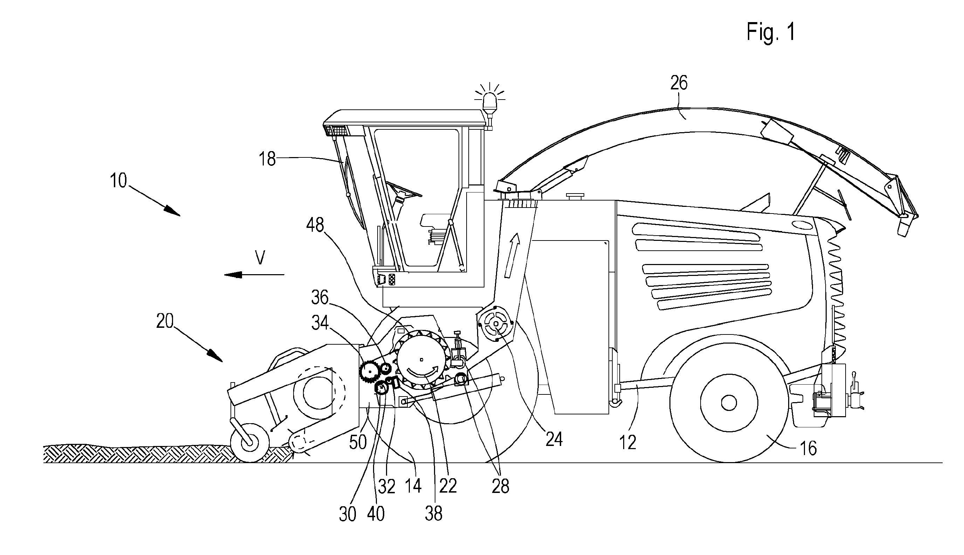

Ein in der Figur 1 gezeigter selbstfahrender Feldhäcksler 10 baut sich auf einem Rahmen 12 auf, der von vorderen und rückwärtigen Rädern 14 und 16 getragen wird. Die Bedienung des Feldhäckslers 10 erfolgt von einer Fahrerkabine 18 aus, von der aus eine Erntegutaufnahmevorrichtung 20 in Form einer Pick-up einsehbar ist. Mittels der Erntegutaufnahmevorrichtung 20 vom Boden aufgenommenes Gut, z. B. Gras oder dergleichen, wird einem Häckselaggregat zugeführt, das hier aus einer mit Messern 48 besetzten Häckseltrommel 22 aufgebaut ist, die es im Zusammenwirken mit einer Gegenschneide 38 in kleine Stücke häckselt und es einer Fördervorrichtung 24 aufgibt. Bei anderen Feldhäckslern, insbesondere angebauten oder gezogenen Feldhäckslern, könnte das Häckselaggregat anstelle einer Häckseltrommel 22 auch aus einem Scheibenradhäcksler bestehen. Das Gut verlässt die Erntemaschine 10 zu einem nebenher fahrenden Anhänger über einen höhenverstellbaren und um die Hochachse drehbaren Austragschacht 26. Zwischen der Häckseltrommel 22 und der Fördervorrichtung 24 befindet sich eine Nachzerkleinerungsvorrichtung mit zwei Walzen 28, durch die das zu fördernde Gut der Fördervorrichtung 24 tangential zugeführt wird.

Zwischen der Erntegutaufnahmevorrichtung 20 und der Häckseltrommel 22 wird das Gut durch einen Einzugsförderer mit unteren Einzugswalzen 30, 32 und oberen Einzugswalzen 34, 36 transportiert, die innerhalb eines Einzugsgehäuses 50 angebracht sind. Die Einzugswalzen 30 bis 36 werden auch als Vorpresswalzen bezeichnet, da die oberen Einzugswalzen 34, 36 durch Hydraulik- und/oder Federkraft gegen die unteren Einzugswalzen 30, 32 vorgespannt sind, damit das Erntegut zwischen den Einzugswalzen 30 bis 36 vorverdichtet wird und besser geschnitten werden kann. Im Folgenden beziehen sich Richtungsangaben, wie hinten und vorn, auf die Vorwärtsrichtung V des Feldhäckslers 10, die in der Figur 1 von rechts nach links verläuft.

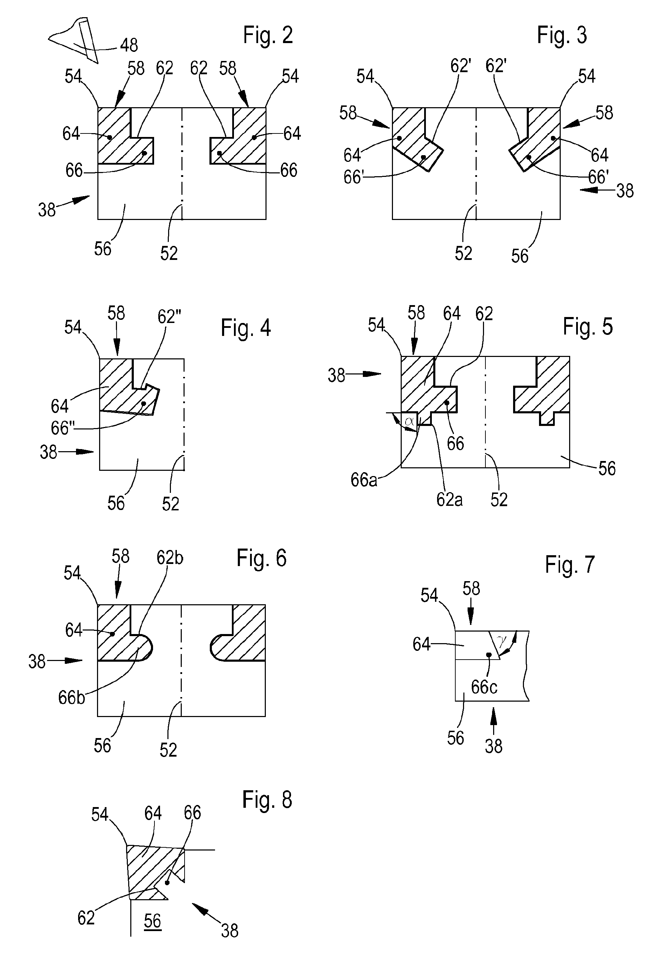

Die Figur 2 zeigt eine erste Ausführungsform einer erfindungsgemäßen Gegenschneide 38 für den Feldhäcksler 10 der Figur 1. Die Gegenschneide 38 ist zu einer Längsmittelebene 52 symmetrisch ausführt, damit sie nach Ende der Standzeit einer Kante 54 um 180° gedreht und weiter benutzt werden kann. Alternativ kann die Hartstoffschicht auch lediglich einseitig angebracht werden, wodurch ein drehen bei verschlissener Gegenschneide 38 nicht möglich ist. Die Gegenschneide 38 umfasst einen einteiligen Körper 56, an dessen oberen Ecken zwei sich axial erstreckende, größere Ausnehmungen 58 rechteckigen Querschnitts angeordnet sind. An dem der Längsmittelebene 52 zugewandten Seite der Ausnehmungen 58 sind am unten eingezeichneten Ende der Ausnehmungen 58, d.h. von der Oberseite der Gegenschneide 38 beabstandet, jeweils kleinere, sich axial erstreckende Vertiefungen 62 im Körper 56 vorgesehen, die ebenfalls einen rechteckigen Querschnitt aufweisen. In den Ausnehmungen 58 ist jeweils ein komplementär passender, sich axial erstreckender Hartstoffeinsatz 64 angeordnet, der einen sich axial erstreckenden, rechteckigen Vorsprung 66 umfasst, welcher sich in die Vertiefung 62 hinein erstreckt. Der Querschnitt der Ausnehmung 58 mit der Vertiefung 62 ist demnach L-förmig, was auch für den Querschnitt des Hartstoffeinsatzes 64 mit dem Vorsprung 66 gilt. Der Hartstoffeinsatz 64 ist am Körper 56 befestigt, beispielsweise damit verschraubt, verklebt und/oder an den äußeren Übergängen verschweißt. Die aneinander anliegenden Flächen des Hartstoffeinsatzes 64 und des Körpers 56 müssen nicht flach sein, wie in der Figur 2 gezeigt wird, sondern könnten wellenförmig, sägezahnförmig, stufenförmig oder schwalbenschwanzartig profiliert sein. Die Profilierung kann sich in der radialen Ebene der Häckseltrommel 22 erstrecken, oder in axialer Richtung oder unter einem beliebigen Winkel diagonal.

Der Hartstoffeinsatz 64 mit dem Vorsprung 66 wird durch die ihn umschließende Ausnehmung 58 mit der Vertiefung 62 an vier Flächen, nämlich an seiner Unterseite von unten, an seinen rechts eingezeichneten Flächen des eigentlichen Hartstoffeinsatzes 64 und des Vorsprungs 66 von rechts (d.h. in radialer Richtung der Häckseltrommel 22) und an der Oberseite des Vorsprungs 66 von oben her (d.h. in tangentialer Richtung der Häckseltrommel 22) eingeschlossen.

Falls nun der in Figur 2 links eingezeichnete Hartstoffeinsatz 54 mit den Messern 48 der Häckseltrommel 22 zusammenwirkt, bewegen sich die Messer 48 in Richtung des Pfeils 68 und schneiden das Erntegut im Zusammenwirken mit der Kante 54 ab. Dabei entstehen nach unten gerichtete Schneidkräfte, die den Hartstoffeinsatz 64 nach unten gegen den Körper 56 drücken. Zudem erzeugen die Schnittkräfte im Hartstoffeinsatz 64 ein Drehmoment im Gegenuhrzeigersinn, das den Vorsprung 66 des Hartstoffeinsatzes 64 in die Vertiefung 62 hinein drückt und die obere Wand und die rechte Wand des Vorsprungs 66 gegen die untere Wand und die vertikale Wand der Vertiefung 62 presst. Das beim Schneiden des Ernteguts entstehende Drehmoment wird demnach über den Vorsprung 66 und die Vertiefung 62 in den Körper 56 abgeleitet, sodass die mechanische Verbindung zwischen dem Hartstoffeinsatz 64 und dem Körper 56 entlastet wird und ein Ablösen des Hartstoffeinsatzes 64 vom Körper 56 nicht zu befürchten ist.

Bei der zweiten Ausführungsform nach Figur 3 sind die Vertiefung 62' und der Vorsprung 66' gegenüber der ersten Ausführungsform nach Figur 2 um 45° nach unten gedreht. Bei der dritten Ausführungsform nach Figur 4 sind die Vertiefung 62" und der Vorsprung 66" jeweils winkelförmig gestaltet und bilden einen nach oben hin abgewinkelten Haken. Die Funktion und Wirkungsweise entsprechen jener der Ausführungsform nach Figur 2, denn der Hartstoffeinsatz 64 wird ebenfalls jeweils an wenigstens drei (bei der Ausführungsform nach Figur 3 nämlich an vier und bei der Ausführungsform nach Figur 4 sogar an sechs) Flächen durch die ihn umschließende Ausnehmung 58 mit der Vertiefung 62 eingeschlossen. Bei der Ausführungsform nach Figur 4 werden die Hartstoffeinsätze 64 in axialer Richtung in die Ausnehmung 58 und die Vertiefung 62" eingeschoben, da sie (anders als bei den Ausführungsformen nach den Figuren 2, 3 und 8) aufgrund der Formen der Vertiefung 62" und des Vorsprungs 66" nicht in horizontaler Richtung eingeschoben werden können.

Um die entgegen der Schneidrichtung auftretenden Kräfte abzufangen, die beispielsweise bei einer auf Berührung basierenden Verstellung der Gegenschneide 38 auftreten können, kann der Körper 56 und die Hartstoffschicht 64 nach Figur 5 mit einem weiteren, sich nach unten erstreckenden Vorsprung 66a versehen werden, der eine zugehörige Vertiefung 62a im Körper 56 eindringt. Dieser Vorsprung 66a kann um einen nicht unbedingt senkrechten Winkel α von der Horizontalen abweichen. Zudem kann der Vorsprung 66a analog zur Ausführungsform nach Figur 4 L-förmig gestaltet werden, wobei sich der Haken nach links oder rechts erstrecken kann.

Bei der Ausführungsform nach Figur 6 sind der Vorsprung 66b und die Vertiefung 62b mit halbkreisförmigen Querschnitten versehen. Diese Halbkreisform stellt eine quasi unendlich große Anzahl an Flächen bereit, an welcher der Körper 56 und die Hartstoffschicht 64 aneinander anliegen und sichert die Hartstoffschicht 64 gegen die beim Schneiden entstehenden Drehmomente.

Die Figur 7 zeigt eine Ausführungsform, bei der die Vertiefung 62c einen dreieckigen Querschnitt aufweist. Analog ist der Querschnitt des in die Vertiefung 62c passenden Vorsprungs 66c dreieckig. Hier liegen somit nur zwei Flächen vor, an denen der Hartstoffeinsatz 64 im Körper 56 anliegt. Der Winkel γ der Vertiefung sorgt dafür, dass die beim Schneiden entstehenden Drehmomente vom Hartstoffeinsatz 64 auf den Körper 56 übertragen werden, denn die dadurch entstehende, geneigte Fläche überträgt das Drehmoment vom Hartstoffeinsatz 64 auf den Körper 56.

Bei der Ausführungsform nach Figur 8 ist die (innerhalb der Ausnehmung 58 angeordnete) Vertiefung 62 im Hartstoffeinsatz 64 vorgesehen, während der Vorsprung 66 Bestandteil des Körpers 56 ist. Die Winkel und die Funktionsweise der Vertiefung 62 und des Vorsprungs 66 entsprechen der Ausführungsform nach Figur 3.

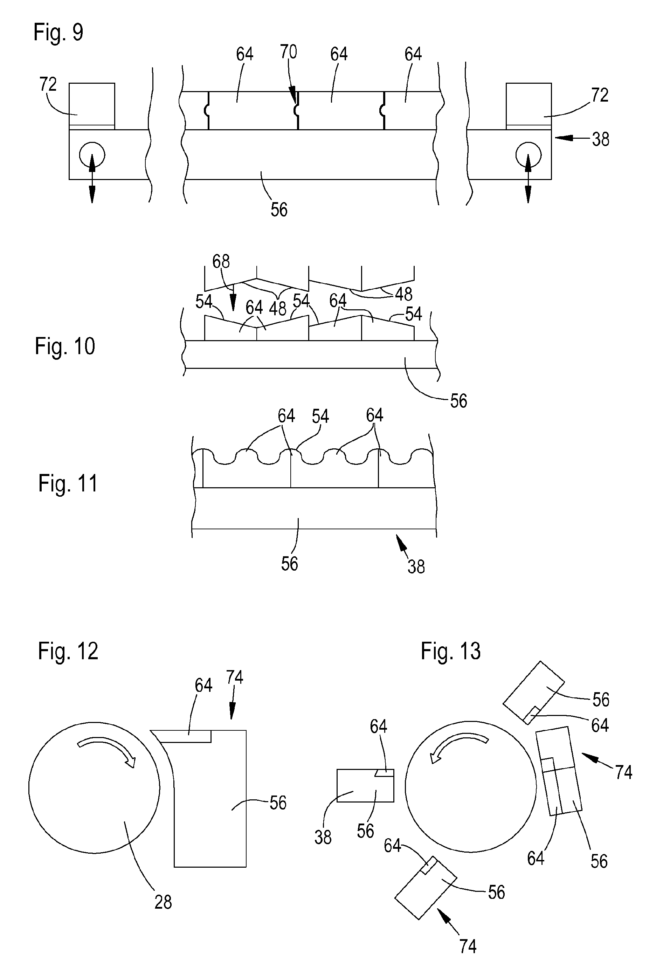

Die in Figur 9 gezeigte Draufsicht auf die Gegenschneide 38 zeigt, dass in axialer Richtung der Gegenschneide 38 mehrere Hartstoffeinsätze 64 aufeinander folgen. Die Hartstoffeinsätze 64 können einer der Ausführungsformen nach den anderen gezeigten Figuren entsprechen. Die Endabschnitte 70 der Hartstoffeinsätze 64 sind miteinander verzahnt, d.h. ein Endabschnitt 70 hat eine Vertiefung, in welche ein Vorsprung eines benachbarten Endabschnitts 70 eingreift. Die Endabschnitte 70 könnten auch beliebig anders, z.B. wellenförmig, sägezahnförmig oder schwalbenschwanzartig profiliert sein. Dadurch werden die Hartstoffeinsätze 64 in radialer Richtung der Häckseltrommel 22 aneinander fixiert. Die in Figur 9 gezeigte, stufenförmige (oder wellenförmige, sägezahnförmige oder schwalbenschwanzartige) Verzahnung der Endabschnitte 70 könnte zusätzlich oder alternativ in vertikaler Richtung angeordnet sein, um die Hartstoffeinsätze 64 in tangentialer Richtung der Häckseltrommel 22 aneinander zu fixieren. An beiden Enden ist der Körper 56 mit dem Rahmen 12 des Feldhäckslers 10 durch Verstelleinrichtungen (nicht gezeigt) gekoppelt, mit denen der Schneidspalt zwischen den Messern 48 und der Kante 54 auf ein gewünschtes Maß eingestellt werden kann. Dort können ggf. Halterungen 72 zum axialen Fixieren der Hartstoffeinsätze 64 angebracht sein. Grundsätzlich basiert die Verbindung jedoch auf Formschluss in der Gegenschneide 38, eine axiale Sicherung wird über Reibschluss erzielt.

Die Figur 10 zeigt eine frontale Ansicht auf eine mögliche Ausführungsform der Gegenschneide 38. Die Kanten 54 der Hartstoffeinsätze 64 sind nicht axial (d.h. parallel zur Drehachse der Häckseltrommel 22) ausgerichtet, sondern in einem Winkel dazu. Bei der dargestellten Ausführungsform hat jeder Hartstoffeinsatz 64 eine Schneidkante 54, die über seine gesamte axiale Länge gerade ist. Es wäre jedoch auch möglich, den Winkel der Schneidkante 54 über die Länge des Hartstoffeinsatzes 64 sich ändernd zu gestalten, z.B. indem zwei benachbarte Hartstoffeinsätze 64 der Figur 10 in einem einzigen Hartstoffeinsatz 64 integriert werden.

Die Kanten 54 bilden in der Ausführungsform nach Figur 10 eine Sägezahnform. Die sich in Richtung des Pfeils 68 bewegenden Messer 48 der Häckseltrommel 22 sind vorzugsweise gegensinnig dazu abgewinkelt, wie in der Figur 10 ebenfalls dargestellt ist. Dadurch wird der Schnittwinkel, unter dem das Erntegut zwischen den Schneidkanten der Messer 48 und den Kanten 54 geschnitten wird, vergrößert. Durch die dargestellte, unregelmäßige Anordnung der Winkel kann eine Geräuschminderung erzielt werden. Außerdem können die Kanten 54 von der Längsmittelebene der Gegenschneide nach außen absinkend angeordnet werden, um das Erntegut nach außen zu drücken und die im Stand der Technik zu beobachtende verstärkte Ansammlung von Erntegut in der Maschinenmitte zu vermeiden.

Bei der Ausführungsform nach Figur 11 sind die Kanten 54 dreidimensional wellenförmig gestaltet. Die hier verwendeten Messer (nicht gezeigt) können axiale Schneidkanten oder abgewinkelte Schneidkanten analog zur Figur 10 aufweisen.

Bei den nicht-axial ausgerichteten Kanten 54 der Figuren 10 und 11 ist zu berücksichtigen, dass die Messer 48 der Häckseltrommel 22 einen zylindrischen Hüllkreis beschreiben, an den die Kanten 54 sich mit einem möglichst kleinen Spalt anschließen müssen, um einen energiesparenden Schnittvorgang zu ermöglichen. Daher sind die Hartstoffeinsätze 64 als dreidimensionale Gebilde mit im Raum gekrümmten Kanten 54 auszuführen, um den gewünschten Schneidspalt herstellen zu können. Die Hartstoffeinsätze 64 können dazu insbesondere durch Sintern oder Gießen hergestellt werden. Es sind auch nicht-zylindrische Formen der Häckseltrommel 22 denkbar, wozu auf die Offenbarung der DE 10 2012 201 334 A1 verwiesen wird, an welche die Form der Hartstoffeinsätze 64 dann entsprechend anzupassen wäre.

Die vorliegende Erfindung kann nicht nur an Gegenschneiden 38, sondern auch an Abstreifern 74 verwendet werden, die beispielsweise einer Walze 28 der Nachzerkleinerungsvorrichtung (vgl. Figur 12) oder der Häckseltrommel 22 (vgl. Figur 13) oder einer oder mehreren der Einzugswalzen 30 bis 36 zugeordnet sein können. Der Abstreifer 74 kann auch an einer Walze einer Ballenpresse oder einer Fördertrommel eines Mähdreschers eingesetzt werden. Der Abstreifer 74 kann ein einer beliebigen Orientierung montiert werden, wie in der Figur 13 schematisch gezeigt wird. Die Anbringung des Abstreifers 74 erfolgt jedoch, anders als in der Figur 13 gezeigt, an der Abgabestelle zum Kanal zur Nachzerkleinerungsvorrichtung.

## Patentansprüche

1. Element zum Abstützen und/oder Leiten von Erntegut in einer Erntemaschine, insbesondere Gegenschneide (38) oder Abstreifer (74), umfassend einen einteiligen Körper (56) mit einer sich axial erstreckenden Ausnehmung (58), in welcher ein komplementärer, eine Kante (54) umfassender Hartstoffeinsatz (64) eingefügt oder einfügbar ist, **dadurch gekennzeichnet, dass** eine Fläche der Ausnehmung (58) derart angeordnet ist, dass ein im Betrieb auf den Hartstoffeinsatz (64) wirkendes Drehmoment vom Hartstoffeinsatz (64) auf den Körper (56) überleitet.

2. Element nach Anspruch 1, wobei die Fläche den Hartstoffeinsatz (64) zwischen sich und einer weiteren Fläche des Körpers (56) einschließt.

3. Element nach Anspruch 2, wobei die Ausnehmung den Hartstoffeinsatz (64) im montierten Zustand an wenigstens drei Flächen einschließt oder der Hartstoffeinsatz (64) einen Vorsprung (66c) mit dreieckigem Querschnitt aufweist.

4. Element nach Anspruch 3, wobei der Hartstoffeinsatz (64) und der Körper (56) durch eine zusätzliche, in der Ausnehmung (58) angeordnete, sich axial erstreckende Vertiefung (62, 62', 62", 62a, 62b, 62c) und einen darin eingreifenden Vorsprung (66, 66', 66", 66a, 66b, 66c) aneinander befestigt oder befestigbar sind.

5. Element nach Anspruch 4, wobei die Vertiefung (62, 62', 62a, 62b, 62c) und der Vorsprung (66, 66`, 66a, 66b, 66c) einen zumindest näherungsweise rechteckigen oder runden oder dreieckigen Querschnitt aufweisen.

6. Element nach Anspruch 4 oder 5, wobei die Vertiefung (62, 62', 62", 62a, 62b, 62c) und der Vorsprung (66, 66', 66", 66a, 66b, 66c) sich parallel zur Oberseite des Körpers (56) oder in einem Winkel von insbesondere 45° dazu nach unten erstrecken.

7. Element nach einem der Ansprüche 4 bis 6, wobei die Vertiefung (62") und der Vorsprung (66") winkelförmig und nach oben oder unten gerichtet sind.

8. Element nach einem der vorhergehenden Ansprüche, wobei sich ein Hartstoffeinsatz (64) über die gesamte Breite des Elements erstreckt oder in axialer Richtung mehrere Hartstoffeinsätze (64) aufeinander folgend angeordnet sind und komplementär ineinander eingreifende Endabschnitte (70) aufweisen.

9. Element nach einem der vorhergehenden Ansprüche, wobei der Hartstoffeinsatz (64) eine nicht-axiale Kante (54) bildet.

10. Element nach Anspruch 7, wobei der Hartstoffeinsatz (64) eine sägezahnförmige oder wellenförmige Kante (54) bildet.

11. Element nach einem der vorhergehenden Ansprüche, wobei der Hartstoffeinsatz (64) aus gesintertem oder gegossenem Hartmetall besteht.

12. Erntemaschine, insbesondere Feldhäcksler (10) mit einem Element nach einem der vorherigen Ansprüche.
